# EUROPEAN PATENT APPLICATION

(11) **EP 4 826 594 A1**
(43) Date of publication of application: **21.10.2026**
(21) Application number: 25171452.3
(22) Date of filing: 18.04.2025
(51) Int. Cl.: G06K 19/07

(54) **CHARGE PUMP STAGE AND METHOD OF IMPLEMENTING THE SAME**

(71) Applicant: NXP B.V., 5656 AG Eindhoven (NL)
(72) Inventor: Zoescher, Lukas, 5656AG Eindhoven (NL); Malinowski, Slawomir Rafal, 5656AG Eindhoven (NL); Brandl, Roland, 5656AG Eindhoven (NL)
(74) Representative: Krott, Michel

(57) **Abstract**

In accordance with a first aspect of the present disclosure, there is provided a charge pump stage for use in a radio frequency identification (RFID) tag, the charge pump stage comprising: at least one bias generation unit, wherein said bias generation unit comprises a biasing source and a biasing element; and a regulation element coupled in series to the biasing source and the biasing element, wherein said regulation element is configured to regulate a current or voltage provided by the biasing source to the biasing element. In accordance with a second aspect of the present disclosure, there is conceived a corresponding method of implementing a charge pump stage for use in an RFID tag.

## Description

### TECHNICAL FIELD

The present disclosure relates to a charge pump stage. Furthermore, the present disclosure relates to a corresponding method of implementing a charge pump stage.

### BACKGROUND

The backscatter power level of a radio frequency identification (RFID) transponder - often referred to as an "RFID tag" - is an important parameter for achieving a robust communication between said transponder and a reader device. Accordingly, the performance of RFID tags is often evaluated in terms of this backscatter power level. Furthermore, requirements may be in place which specify a minimum limit for said backscatter power level. However, it may be difficult to ensure that an RFID tag meets these requirements.

### SUMMARY

In accordance with a first aspect of the present disclosure, there is provided a charge pump stage for use in a radio frequency identification (RFID) tag, the charge pump stage comprising: at least one bias generation unit, wherein said bias generation unit comprises a biasing source and a biasing element; and a regulation element coupled in series to the biasing source and the biasing element, wherein said regulation element is configured to regulate a current or voltage provided by the biasing source to the biasing element.

In one or more embodiments, the regulation element comprises a control input node configured to receive a control input for regulating said current or voltage.

In one or more embodiments, the control input node is coupled to an internal node of the charge pump stage or to an internal node of another charge pump stage of the RFID tag.

In one or more embodiments, the control input node is coupled to a control circuit of the RFID tag.

In one or more embodiments, the regulation element is directly coupled to an output of the biasing source and to an input of the biasing element.

In one or more embodiments, the regulation element is coupled in series to an input of the biasing source, and an output of the biasing source is coupled to an input of the biasing element.

In one or more embodiments, the biasing source comprises a first part and a second part, wherein the regulation element is directly coupled to an output of the first part of the biasing source, and wherein the regulation element is coupled to an input of the biasing element through the second part of the biasing source.

In one or more embodiments, the biasing source is implemented as a biasing charge pump.

In one or more embodiments, the regulation element is implemented as an N-channel metal-oxide semiconductor (NMOS) transistor or as a P-channel metal-oxide semiconductor (PMOS) transistor.

In one or more embodiments, the regulation element comprises multiple devices, wherein said devices are configured to regulate the current or voltage based on a single control input or multiple control inputs having a single or different signal polarities.

In one or more embodiments, said devices are implemented as NMOS transistors or as PMOS transistors.

In one or more embodiments, a charge pump comprises a charge pump stage of the kind set forth.

In one or more embodiments, an RFID tag comprises a charge pump of the kind set forth.

In one or more embodiments, the regulation element is configured to be controlled in dependence on an operating mode of the RFID tag.

In accordance with a second aspect of the present disclosure, there is conceived a method of implementing a charge pump stage for use in a radio frequency identification (RFID) tag, the method comprising: providing the charge pump stage with at least one bias generation unit, wherein said bias generation unit comprises a biasing source and a biasing element; and providing the charge pump stage with a regulation element coupled in series to the biasing source and the biasing element, wherein said regulation element is configured to regulate a current or voltage provided by the biasing source to the biasing element.

### DESCRIPTION OF DRAWINGS

Embodiments will be described in more detail with reference to the appended drawings.
Fig. 1 shows an example of a radio frequency identification (RFID) front-end of an RFID tag integrated circuit (IC).
Fig. 2 shows an example of a radio frequency (RF) charge pump.
Fig. 3 shows an example of a charge pump stage.
Fig. 4 shows an example of a bias generation unit.
Fig. 5 shows another example of a bias generation unit.
Fig. 6 shows a further example of a bias generation unit.
Fig. 7 shows an illustrative embodiment of a charge pump stage.
Fig. 8 shows an illustrative embodiment of a method of implementing a charge pump stage.
Fig. 9 shows an illustrative embodiment of a bias generation unit.
Fig. 10 shows another illustrative embodiment of a bias generation unit.
Fig. 11 shows a further illustrative embodiment of a bias generation unit.
Fig. 12 shows a normalized equivalent parallel input resistance (R_{P}) of an RFID tag IC of an RFID tag versus a normalized power on tag forward (POTF) of said RFID tag.
Fig. 13 shows a normalized power on tag reverse (POTR) of an RFID tag versus a normalized POTF of said RFID tag.

### DESCRIPTION OF EMBODIMENTS

The backscatter power level of an ultra-high frequency (UHF) RFID tag may be referred to as the power on tag reverse (POTR). This parameter has a large impact on the communication robustness between an RFID tag and a reader device. The performance of an RFID tag is therefore often evaluated in terms of POTR, and certain requirements may be in place which specify a minimum limit for POTR at a specific level of power received by an RFID tag. The characteristics of POTR versus the receive power level of an RFID tag, denoted as the power on tag forward (POTF), strongly depends on the behavior of the equivalent parallel resistance (R_{P}) of the RFID tag integrated circuit (IC) of an RFID tag. R_{P} of an RFID tag IC typically decreases with a rising POTF above a minimum required operating power level POTF₀ of the tag. The reduction in R_{P} of the RFID tag IC is caused at the one hand by the non-linear behavior of the rectifier - more specifically of the RF charge pump - which provides the internal power supply of the RFID tag IC from a received reader signal, and on the other hand by the required limitation of internal supply voltage levels to prevent overvoltage conditions at circuit elements of the RFID tag IC. Generally speaking, it may be difficult to increase the backscatter power level of an RFID tag IC.

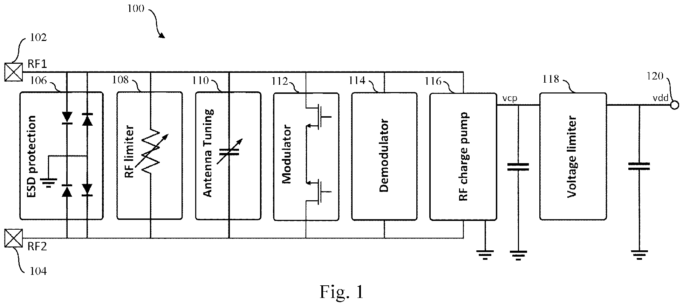

**Fig. 1** shows an example of an RFID front-end 100 of an RFID tag IC. The RFID front-end 100 comprises a first antenna terminal 102, a second antenna terminal 104, an electrostatic discharge (ESD) protection block 106, a radio frequency (RF) limiter 108, an antenna tuning block 110, a modulator 112, a demodulator 114, an RF charge pump 116, a voltage limiter 118, and a supply voltage node 120 of RFID tag circuits (i.e., of one or more functional circuits of the RFID tag IC). The RF charge pump 116 is configured to rectify and transform the RF voltage received from an antenna through the antenna terminals 102, 104, and provides a direct current (DC) supply voltage for the core circuits (not shown) of the chip (i.e., the tag IC), for example, for a digital part of the tag IC and for a non-volatile memory. The modulator 112 is configured to modulate the input impedance in order to modulate the signal that is scattered back from the antenna to transmit information to an external RFID reader (not shown). Furthermore, the demodulator 114 is configured to demodulate an amplitude-modulated signal transmitted by said reader. The antenna tuning block 110 is configured to tune the chip input capacitance to maximize the power transfer from the antenna to the chip input. The ESD protection block 106 is typically implemented by anti-parallel pn-junction diodes. The RF limiter 108 is configured to limit the RF voltage amplitude at the antenna terminals 102, 104, at high received power levels on the connected antenna. Furthermore, the voltage limiter 118 is configured to limit the output voltage of the RF charge pump (i.e., voltage *vcp*) to prevent a degradation or a damage of the connected core circuits due to overvoltage.

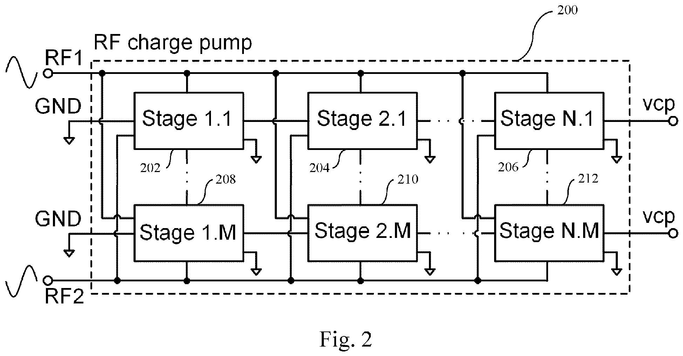

**Fig. 2** shows an example of an RF charge pump 200. The RF charge pump 200 comprises a plurality of charge pump stages 202, 204, 206, 208, 210, 212. In particular, Fig. 2 shows a block diagram of a differential or balanced RF charge pump 200. The input terminals RF1 and RF2 are coupled to a tag antenna and receive an RF signal. The received signal at RF1 and RF2 is typically shifted by approximately 180°. The DC input and output terminals of the charge pump stages 202, 204, 206, 208, 210, 212 may be connected in series or in parallel. The charge pump stages 202, 204, 206, 208, 210, 212 may share further internal signals. Each charge pump stage 202, 204, 206, 208, 210, 212 provides a gain in DC voltage by rectifying the signal received at RF1 and/or RF2. As shown in the example of Fig. 2, the DC input terminals of the first parallel stages 1.1 to 1.M may be connected to the chip ground node GND. In a similar way, the last parallel stages N.1 to N.M may be connected to the output node *vcp.* The RF charge pump output voltage at node *vcp* may be used as supply voltage of an RFID transponder IC. Furthermore, the RF charge pump 200 may provide multiple supply voltages at different outputs to supply separate circuit domains of an RFID transponder IC. Alternatively, RFID transponder ICs may utilize a single-ended frontend and RF charge pump circuit configuration. In case of a single-ended circuit configuration, either node RF1 or RF2 of the front-end and the RF charge pump as shown in Fig. 1 and 2, respectively, is coupled to the ground node GND. The RF input and GND node of a single-ended RFID front-end and RF charge pump are coupled to a tag antenna.

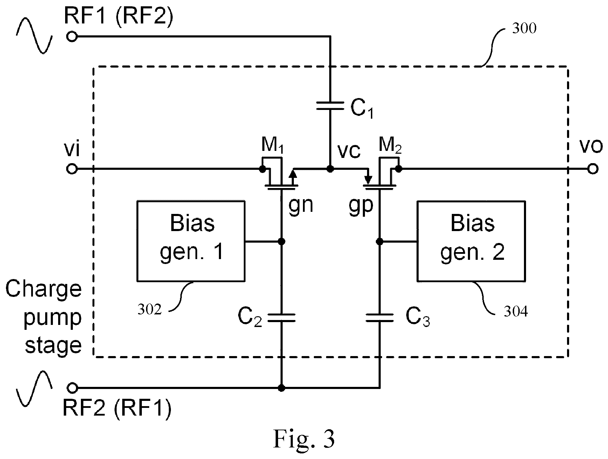

**Fig. 3** shows an example of a charge pump stage 300. The gate terminals of the NMOS transistor M₁ and the PMOS transistor M₂ are coupled to RF2 via capacitors C₂ and C₃, respectively. The source terminals of M₁ and M₂ are coupled to RF1 via capacitor C₁. Two bias generation units 302, 304 provide DC bias voltages at the gate nodes *gn* and *gp* of M₁ and M₂, respectively. The bias generation units 302, 304 may be coupled to other internal nodes such as *vi, vc*, or *vo* of the RF charge pump stage 300, but also to RF1 and/or RF2 in some circuit implementations. The bias generation units 302, 304 may be also coupled to each other. Furthermore, the bias generation units 302, 304 may receive signals from another circuit block that is external to the RF charge pump stage 300. The bias generation units 302, 304 or parts of the bias generation units 302, 304 may be shared among multiple RF charge pump stages. At a negative voltage swing at RF1, and thus a positive voltage swing at RF2, transistor M₁ becomes conductive, and charge is transferred from the DC input node *vi* to C₁. Transistor M₂ transitions to an essentially non-conductive or low-conductive state in this first operating condition. At a positive voltage swing at RF1, and thus a negative voltage swing at RF2, transistor M₂ becomes conductive, and the charge stored on C₁ is transferred to the DC output node *vo.* Similar to transistor M₂ in the first operating condition, transistor M₁ transitions to a low-conductive state in this second operating condition. An optimum efficiency in terms of output DC power provided at *vi* and *vo* relative to the RF power absorbed at RF1 and RF2 can be achieved by adjusting the bias voltages at *gn* and *gp* to balance the voltage drop at M₁ and M₂ during periods of charge transfer versus the reverse current in the low-conductive states of M₁ and M₂. Therefore, the DC voltage levels at *gn* and *gp* relative to *vc* corresponding to the gate-source voltage of M₁ and M₂, respectively, are typically adjusted to a level close to the threshold voltage Vth of the transistors. As indicated in Fig. 3, terminals RF1 and RF2 of a charge pump stage of a differential or balanced RF charge pump may be exchanged. In a single-ended RF charge pump circuit configuration, terminal RF2 coupling to C₂ and C₃ is connected to ground node GND.

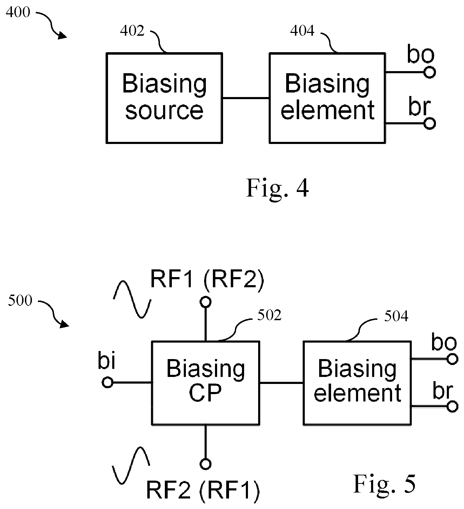

**Fig. 4** shows an example of a bias generation unit 400. In particular, Fig. 4 shows a block diagram of a bias generation unit 400 that may be used in the RF charge pump stage shown in Fig. 3. The bias generation unit 400 comprises a biasing source 402 and a biasing element 404, which are coupled to each other. The biasing source 402 provides a current or a voltage as input to the biasing element 404. The biasing element 404 derives from the received current or voltage a bias voltage at output node *bo* by diverting current to a reference output *br.* For example, outputs *bo* and *br* of the biasing element 404 may be connected to nodes *gn* or *gp* and *vi, vc* or *vo*, respectively, of the charge pump stage shown in Fig. 3. It is noted that multiple charge pump stages may share an entire biasing source and/or biasing element, or parts of a biasing source and/or biasing element.

**Fig. 5** shows another example of a bias generation unit 500. In particular, Fig. 5 shows that the biasing source of an RF charge pump stage may be implemented by means of a charge pump, referred to as a biasing charge pump (biasing CP) 502. The biasing charge pump 502 receives RF signals at terminals RF1 and RF2 and provides a DC current to the biasing element 504 with reference to an input terminal bi. Input bi may be connected, for example, to nodes *vi, vc,* or *vo* of the charge pump stage shown in Fig. 3.

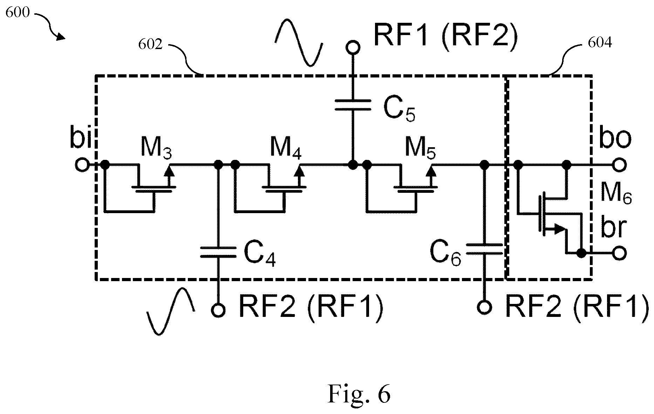

**Fig. 6** shows a further example of a bias generation unit 600. In particular, Fig. 6 illustrates an example circuit diagram of a charge pump bias generation unit 600 using a biasing charge pump 602. More specifically, transistors M₃, M₄, and M₅ in combination with capacitors C₄, C₅ and C₆ form the biasing charge pump 602, which provides a current to a biasing element 604 consisting of transistor M₆. The gate-source voltage of diode-connected transistor M₆ defines the bias voltage at node *bo* relative to reference node *br.* For example, outputs *bo* and *br* may be connected to nodes *gn* and *vi*, respectively, and input *bi* may be connected to nodes *vi, vc,* or *vo* of the charge pump stage shown in Fig. 3. In case of a rising voltage amplitude at RF1 and RF2 the output current of the biasing charge pump 602 increases. Transistor M₆ conducts an increasing current to node *br* due to its non-linear characteristic, and thus stabilizes the bias voltage at *bo* relative to *br.* In practice, the biasing element 604 behaves as a shunt regulator. The bias generation circuit shown in Fig. 6 is suitable for providing a bias voltage at the gate node *gn* of NMOS transistor M₁ of the charge pump stage shown in Fig. 3. A corresponding bias generation circuit for PMOS transistor M₂ in Fig. 3 may use a PMOS transistor as a biasing element and a biasing charge pump to provide a current in reverse direction, complementary to the bias generation circuit shown in Fig. 6. When the charge pump stage including its components, as shown in detail in Figs. 3 to 6, are used in an RFID tag, the backscatter power level of said RFID tag may not be sufficiently high.

Now discussed are a charge pump stage and a corresponding method of implementing a charge pump stage, which facilitate increasing the backscatter power level of an RFID tag in which said charge pump stage is used.

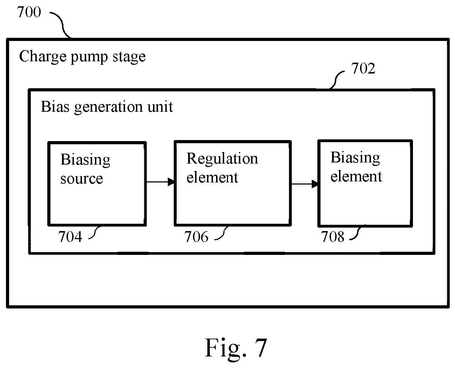

**Fig. 7** shows an illustrative embodiment of a charge pump stage 700. The charge pump stage 700 comprises at least one bias generation unit 702. The bias generation unit 702 comprises a biasing source 704 and a biasing element 708. Furthermore, the charge pump stage 700 comprises a regulation element 706 coupled in series to the biasing source 704 and the biasing element 708. Since the regulation element 706 is coupled in series to the biasing source 704 and the biasing element 708, it may also be referred to as a "series regulation element". The regulation element 706 is configured to regulate a current or voltage provided by the biasing source 704 to the biasing element 708. By including the regulation element 706 in the bias generation unit 702 of the charge pump stage 700, the backscatter power level of an RFID tag in which the charge pump stage 700 is used may be increased more easily, in particular at elevated receive power levels. More specifically, this may be achieved because the regulation element 706 enables an improved regulation of the internal bias voltages of a charge pump in which the charge pump stage 700 is used.

In one or more embodiments, the regulation element comprises a control input node configured to receive a control input for regulating said current or voltage. In this way, the regulation element may be controlled more easily. In one or more embodiments, the control input node is coupled to an internal node of the charge pump stage or to an internal node of another charge pump stage of the RFID tag. In this way, the regulation element may be controlled in a suitable manner. Furthermore, in one or more embodiments, the control input node is coupled to a control circuit of the RFID tag. In this way, the regulation element may be controlled in an alternative manner, resulting in a practical implementation of the charge pump stage.

In one or more embodiments, the regulation element is directly coupled to an output of the biasing source and to an input of the biasing element. In this way, a practical implementation of the bias generation unit may be realized. In one or more embodiments, the regulation element is coupled in series to an input of the biasing source, and an output of the biasing source is coupled to an input of the biasing element. In this way, an alternative practical implementation of the bias generation unit may be realized. Furthermore, in one or more embodiments, the biasing source comprises a first part and a second part, wherein the regulation element is directly coupled to an output of the first part of the biasing source, and wherein the regulation element is coupled to an input of the biasing element through the second part of the biasing source. In this way, another alternative practical implementation of the bias generation unit may be realized. Furthermore, in one or more embodiments, the biasing source is implemented as a biasing charge pump. In this way, a practical implementation of the biasing source may be realized. Furthermore, in one or more embodiments, the regulation element is implemented as an N-channel metal-oxide semiconductor (NMOS) transistor or as a P-channel metal-oxide semiconductor (PMOS) transistor. In this way, a practical implementation of the regulation element may be realized, having a relatively low complexity and low area cost.

In one or more embodiments, the regulation element comprises multiple devices, wherein said devices are configured to regulate the current or voltage based on a single control input or multiple control inputs having a single or different signal polarities. Furthermore, in one or more embodiments, said devices are implemented as NMOS transistors or as PMOS transistors. In this way, a practical implementation of the regulation element may be realized, having a relatively low complexity and low area cost. For example, instead of a single NMOS or PMOS transistor, a transmission gate may be used as a regulation element, which allows to use a unified RF charge pump stage design in combination with a central control circuit providing only two control signals for all the regulation elements of the different charge pump stages. In one or more embodiments, the regulation element is configured to be controlled in dependence on an operating mode of an RFID tag in which the charge pump stage is used. For example, the regulation element may be configured to be controlled in different ways, depending on whether the RFID tag operates in a receive mode, a transmit mode, a memory read mode, a memory write mode, and an antenna tuning mode. In this way, the internal bias voltages of the charge pump may be regulated in dependence on the operating mode of the RFID tag, which may further improve said regulation.

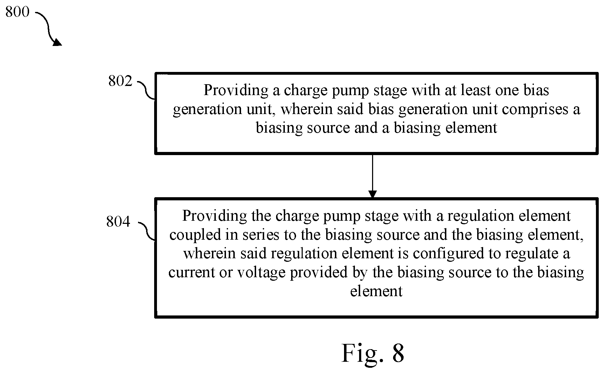

**Fig. 8** shows an illustrative embodiment of a method 800 of implementing a charge pump stage. The method 800 comprises the following steps. At step 802, the charge pump stage is provided with at least one bias generation unit, wherein said bias generation unit comprises a biasing source and a biasing element. Furthermore, at step 804, the charge pump stage is provided with a regulation element coupled in series to the biasing source and the biasing element, wherein said regulation element is configured to regulate a current or voltage provided by the biasing source to the biasing element. As mentioned with reference to the corresponding charge pump stage shown in Fig. 7, by including the regulation element in the bias generation unit of the charge pump stage, the backscatter power level of an RFID tag in which the charge pump stage is used may be increased more easily.

In particular, the presently disclosed charge pump stage and corresponding implementing method facilitate achieving an improved bias regulation of an RF charge pump for a UHF RFID transponder IC. In particular, an increased R_{P} may be realized, and thus an enhanced POTR at elevated receive power levels. To achieve this, a series regulation element is included in the bias generation of an RF charge pump. In this way, the magnitude of bias voltages at rising input voltage amplitude or receive power level may be limited, thereby preventing an overbiasing of rectifier devices. The series regulating element may easily be controlled by means of a feedback connection to an internal node of the charge pump stage. Alternatively, the series regulating element may be controlled by a dedicated control circuit external to the RF charge pump.

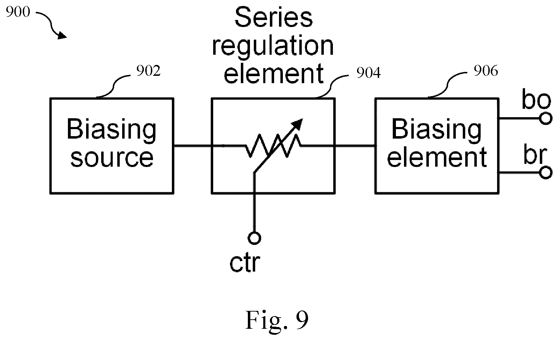

**Fig. 9** shows an illustrative embodiment of a bias generation unit 900. The bias generation unit 900 comprises a biasing source 902, a biasing element 906, and a series regulation element 904 coupled in series to the biasing source 902 and the biasing element 906. The series regulation element 904 receives a control input ctr that allows a regulation of the input current or voltage of the biasing element 906, and thus a regulation - or more specifically a limitation - of the magnitude of the bias voltage provided by the biasing element 906 versus a rising input voltage amplitude or receive power level received at RF1 and RF2. The control input ctr may be connected in a direct feedback configuration, for example, to an internal node of an RF charge pump stage such as nodes *vi, vc,* or *vo* of an RF charge pump stage as shown in Fig. 3. The control input ctr may be also connected to an internal node of another charge pump stage of an RF charge pump. The DC voltage levels at internal nodes of the RF charge pump change with a varying input voltage amplitude and may thus be suitable for directly controlling the series regulation element 904, in order to limit the magnitude of a bias voltage provided by the biasing element 906. Alternatively, the control input *ctr* may receive a signal from a control circuit (not shown). The control circuit may use a signal provided by a sensing circuit (not shown) indicating the voltage amplitude at RF1 and RF2, or a receive power level to control the level of input *ctr.* For example, the sensing circuit may evaluate the signal envelope of the RF signal at RF1 and RF2, or alternatively measure an output voltage or output current of an RF charge pump. The control circuit may provide a continuous control signal or a digital signal as control input to control input node *ctr.* It is noted that a bias generation unit of an RF charge pump may include multiple series regulation elements receiving multiple control inputs *ctr* with varying signal polarity. Such series regulation elements may be in an active operating state regulating a charge pump bias voltage during all operating modes of an RFID tag IC, or only during specific modes such as a receive, transmit, memory read, memory write, and antenna tuning mode of an RFID tag IC.

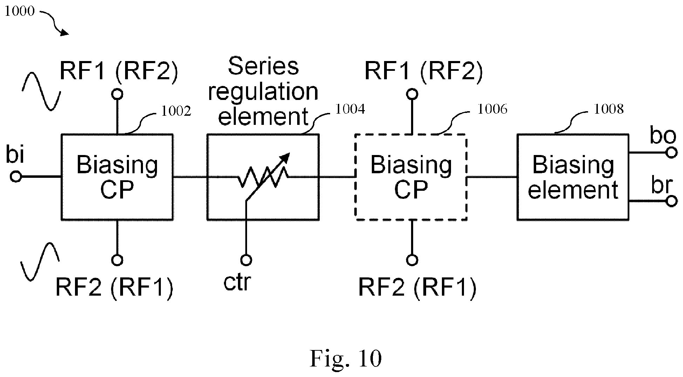

**Fig. 10** shows another illustrative embodiment of a bias generation unit 1000. The bias generation unit 1000 uses a biasing charge pump to provide a current at the input of the biasing element 1008. Generally speaking, one or multiple series regulation elements may be connected between the biasing charge pump and the biasing element, or also between different parts of the biasing charge pump. The latter applies to the bias generation unit 1000, which contains a biasing charge pump having a first part 1002 and a second part 1006. In this embodiment, the series regulation element 1004 is coupled in series to the first part 1002 and the second part 1006 of the biasing charge pump. It is noted that a series regulation element (not shown) may be coupled in series to the input node *bi* of the biasing charge pump.

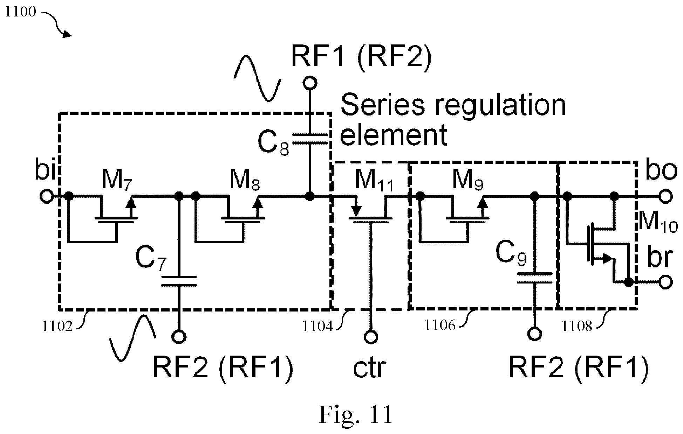

**Fig. 11** shows a further illustrative embodiment of a bias generation unit 1100. In particular, Fig. 11 shows a practical implementation of the bias generation unit shown in Fig. 10. In this implementation, the NMOS transistors M₇, M₈, M₉, in combination with capacitors C₇, C₈, and C₉ form a biasing charge pump providing a current to a biasing element 1108 consisting of NMOS transistor M₁₀. Transistor M₁₁ that is connected in series to transistors M₈ and M₉, and therefore between a first part 1102 and a second part 1106 of the biasing charge pump, forms a series regulation element 1104. Transistor M₁₁ receives a control input *ctr* at its gate terminal. Input node *ctr* may be connected, for example, to nodes *vc* or *vo* of an RF charge pump stage, as shown in Fig. 3. The voltage levels at *vc* or *vo* rise with an increasing voltage amplitude at RF1 and RF2, relative to the source terminal of transistor M₁₁. As a result, the drain-source channel conductance of transistor M₁₁ decreases with a rising input voltage amplitude, thereby limiting the current and thus the gate-source voltage of transistor M₁₀, which corresponds to the bias voltage at node *bo* relative to *br.* Alternatively, input *ctr* may receive a signal from a control circuit, as mentioned before. It is noted that, generally speaking, a series regulation element may include one or multiple devices that allow an adjustment of conductance, such as NMOS and PMOS transistors, and may receive multiple control inputs *ctr* with a varying signal polarity. For example, a series regulation element may consist of an NMOS and a PMOS transistor connected in parallel, which receive two control input signals with an opposite signal polarity. Alternatively, an adjustable conductance may also be implemented by switched-capacitor circuit techniques.

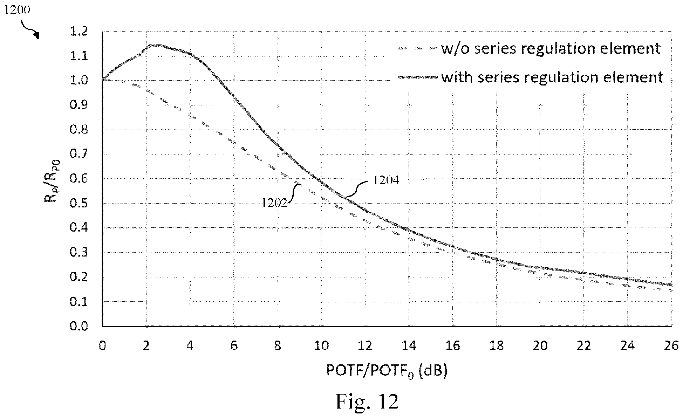

**Fig. 12** shows a graph 1200 displaying a normalized R_{P} of an RFID tag IC of an RFID tag versus a normalized POTF of said RFID tag. In particular, it is shown that the R_{P} as a function of POTF is lower in a first scenario 1202, in which no series regulation element of the kind set forth is used, compared to a second scenario 1204, in which the series regulation element is used.

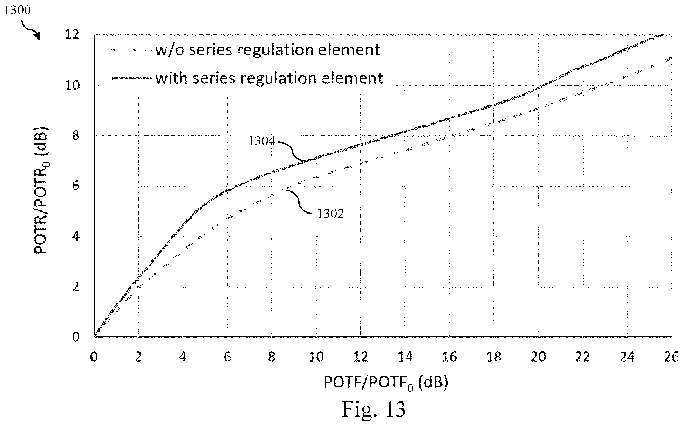

**Fig. 13** shows a graph 1300 displaying a normalized POTR of an RFID tag versus a normalized POTF of said RFID tag. In particular, it is shown that the POTR as a function of POTF is lower in a first scenario 1302, in which no series regulation element of the kind set forth is used, compared to a second scenario 1304, in which the series regulation element is used.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: radio frequency identification (RFID) front-end
- 102: first antenna terminal
- 104: second antenna terminal
- 106: electrostatic discharge (ESD) protection
- 108: radio frequency (RF) limiter
- 110: antenna tuning
- 112: modulator
- 114: demodulator
- 116: RF charge pump
- 118: voltage limiter
- 120: supply voltage node of RFID tag circuits
- 200: RF charge pump
- 202: charge pump stage
- 204: charge pump stage
- 206: charge pump stage
- 208: charge pump stage
- 210: charge pump stage
- 212: charge pump stage
- 300: charge pump stage
- 302: bias generation unit
- 304: bias generation unit
- 400: bias generation unit
- 402: biasing source
- 404: biasing element
- 500: bias generation unit
- 502: biasing charge pump (biasing CP)
- 504: biasing element
- 600: bias generation unit
- 602: biasing charge pump
- 604: biasing element
- 700: charge pump stage
- 702: bias generation unit
- 704: biasing source
- 706: regulation element
- 708: biasing element
- 800: method of implementing a charge pump stage
- 802: providing the charge pump stage with at least one bias generation unit, wherein said bias generation unit comprises a biasing source and a biasing element
- 804: providing the charge pump stage with a regulation element coupled in series to the biasing source and the biasing element, wherein said regulation element is configured to regulate a current or voltage provided by the biasing source to the biasing element
- 900: bias generation unit
- 902: biasing source
- 904: series regulation element
- 906: biasing element
- 1000: bias generation unit
- 1002: first part of biasing charge pump
- 1004: series regulation element
- 1006: second part of biasing charge pump
- 1008: biasing element
- 1100: bias generation unit
- 1102: first part of biasing charge pump
- 1104: series regulation element
- 1106: second part of biasing charge pump
- 1108: biasing element
- 1200: graph displaying normalized R_{P} versus normalized PTOF
- 1202: first scenario, without series regulation element
- 1204: second scenario, with series regulation element
- 1300: graph displaying normalized POTR versus normalized POTF
- 1302: first scenario, without series regulation element
- 1304: second scenario, with series regulation element

## Claims

1. A charge pump stage for use in a radio frequency identification, RFID, tag, the charge pump stage comprising:
at least one bias generation unit, wherein said bias generation unit comprises a biasing source and a biasing element; and
a regulation element coupled in series to the biasing source and the biasing element, wherein said regulation element is configured to regulate a current or voltage provided by the biasing source to the biasing element.

2. The charge pump stage of claim 1, wherein the regulation element comprises a control input node configured to receive a control input for regulating said current or voltage.

3. The charge pump stage of claim 2, wherein the control input node is coupled to an internal node of the charge pump stage or to an internal node of another charge pump stage of the RFID tag.

4. The charge pump stage of claim 2, wherein the control input node is coupled to a control circuit of the RFID tag.

5. The charge pump stage of any preceding claim, wherein the regulation element is directly coupled to an output of the biasing source and to an input of the biasing element.

6. The charge pump of any one of claims 1 to 4, wherein the regulation element is coupled in series to an input of the biasing source, and wherein an output of the biasing source is coupled to an input of the biasing element.

7. The charge pump stage of any one of claims 1 to 4, wherein the biasing source comprises a first part and a second part, wherein the regulation element is directly coupled to an output of the first part of the biasing source, and wherein the regulation element is coupled to an input of the biasing element through the second part of the biasing source.

8. The charge pump stage of any preceding claim, wherein the biasing source is implemented as a biasing charge pump.

9. The charge pump stage of any preceding claim, wherein the regulation element is implemented as an N-channel metal-oxide semiconductor, NMOS, transistor or as a P-channel metal-oxide semiconductor, PMOS, transistor.

10. The charge pump stage of any preceding claim, wherein the regulation element comprises multiple devices, wherein said devices are configured to regulate the current or voltage based on a single control input or multiple control inputs having a single or different signal polarities.

11. The charge pump stage of claim 10, wherein said devices are implemented as NMOS transistors or as PMOS transistors.

12. A charge pump comprising the charge pump stage of any preceding claim.

13. An RFID tag comprising the charge pump of claim 12.

14. The RFID tag of claim 13, wherein the regulation element is configured to be controlled in dependence on an operating mode of the RFID tag.

15. A method of implementing a charge pump stage for use in a radio frequency identification, RFID, tag, the method comprising:
providing the charge pump stage with at least one bias generation unit, wherein said bias generation unit comprises a biasing source and a biasing element; and
providing the charge pump stage with a regulation element coupled in series to the biasing source and the biasing element, wherein said regulation element is configured to regulate a current or voltage provided by the biasing source to the biasing element.

## Amended claims

### Amended claims in accordance with Rule 137(2) EPC.

1. A charge pump stage (700) for use in a radio frequency identification, RFID, tag, the charge pump stage (700) comprising:
at least one bias generation unit (702), wherein said bias generation unit (702) comprises a biasing source (704) and a biasing element (708); and
a regulation element (706) coupled in series to the biasing source (704) and the biasing element (708), wherein said regulation element (706) is configured to regulate a current or voltage provided by the biasing source (704) to the biasing element (708);
**characterized in that** the regulation element (706) comprises a control input node configured to receive a control input for regulating said current or voltage.

2. The charge pump stage (700) of claim 1, wherein the control input node is coupled to an internal node of the charge pump stage (700) or to an internal node of another charge pump stage of the RFID tag.

3. The charge pump stage (700) of claim 1, wherein the control input node is coupled to a control circuit of the RFID tag.

4. The charge pump stage (700) of any preceding claim, wherein the regulation element (706) is directly coupled to an output of the biasing source (704) and to an input of the biasing element (708).

5. The charge pump stage (700) of any one of claims 1 to 3, wherein the regulation element (706) is coupled in series to an input of the biasing source (704), and wherein an output of the biasing source (704) is coupled to an input of the biasing element (708).

6. The charge pump stage (700) of any one of claims 1 to 3, wherein the biasing source (704) comprises a first part and a second part, wherein the regulation element (706) is directly coupled to an output of the first part of the biasing source (704), and wherein the regulation element (706) is coupled to an input of the biasing element (708) through the second part of the biasing source (704).

7. The charge pump stage (700) of any preceding claim, wherein the biasing source (704) is implemented as a biasing charge pump.

8. The charge pump stage (700) of any preceding claim, wherein the regulation element (706) is implemented as an N-channel metal-oxide semiconductor, NMOS, transistor or as a P-channel metal-oxide semiconductor, PMOS, transistor.

9. The charge pump stage (700) of any preceding claim, wherein the regulation element (706) comprises multiple devices, wherein said devices are configured to regulate the current or voltage based on a single control input or multiple control inputs having a single or different signal polarities.

10. The charge pump stage (700) of claim 9, wherein said devices are implemented as NMOS transistors or as PMOS transistors.

11. A charge pump comprising the charge pump stage (700) of any preceding claim.

12. An RFID tag comprising the charge pump of claim 11.

13. The RFID tag of claim 12, wherein the regulation element (706) is configured to be controlled in dependence on an operating mode of the RFID tag.

14. A method (800) of implementing a charge pump stage for use in a radio frequency identification, RFID, tag, the method comprising:
providing (802) the charge pump stage with at least one bias generation unit, wherein said bias generation unit comprises a biasing source and a biasing element; and
providing (804) the charge pump stage with a regulation element coupled in series to the biasing source and the biasing element, wherein said regulation element is configured to regulate a current or voltage provided by the biasing source to the biasing element;
**characterized in that** the regulation element comprises a control input node configured to receive a control input for regulating said current or voltage.
